## Europäisches Patentamt

## European Patent Office

## Office européen des brevets

(19)

(11) Veröffentlichungsnummer : **0 446 676 B1**

(12)

# EUROPÄISCHE PATENTSCHRIFT

(45) Veröffentlichungstag der Patentschrift :
**09.03.94 Patentblatt 94/10**

(51) Int. Cl.$^5$ : **C05B 13/06, C01B 25/40**

(21) Anmeldenummer : **91102445.3**

(22) Anmeldetag : **20.02.91**

(54) **Anlage zur Herstellung von Ammoniumpolyphosphat.**

(30) Priorität : **05.03.90 DE 4006862**

(43) Veröffentlichungstag der Anmeldung :
**18.09.91 Patentblatt 91/38**

(45) Bekanntmachung des Hinweises auf die
Patenterteilung :
**09.03.94 Patentblatt 94/10**

(84) Benannte Vertragsstaaten :
**AT BE CH DE DK ES FR GB IT LI NL SE**

(56) Entgegenhaltungen :
**EP-A- 0 088 265**
**FR-A- 2 006 107**
**FR-A- 2 200 194**

(73) Patentinhaber : **HOECHST
AKTIENGESELLSCHAFT
D-65926 Frankfurt (DE)**

(72) Erfinder : **Staffel, Thomas, Dr.
Gennerstrasse 153
W-5030 Hürth (DE)**
Erfinder : **Schimmel, Günther, Dr.
Ehrenstrasse 16
W-5042 Erftstadt (DE)**
Erfinder : **Buhl, Horst, Dr.
Nachtigallenweg 12
W-5042 Erftstadt (DE)**
Erfinder : **Grosse, Jürgen, Dr.
Blankenheimer Weg 33
W-5042 Erftstadt (DE)**

## Beschreibung

Die vorliegende Erfindung betrifft eine Anlage zur Herstellung von im wesentlichen wasserunlöslichem, kettenförmigem Ammoniumpolyphosphat aus Ammoniumorthophosphat und Phosphorpentoxid in Gegenwart von gasförmigem Ammoniak, welche aus einem Reaktor mit drehbaren Misch-, Knet- und Zerkleinerungswerkzeugen in seinem Innenraum und einem Zuführungsrohr für die festen Ausgangsstoffe, einem Einleitungsrohr für Ammoniak, einem Gasableitungsrohr sowie einer Austragsleitung für das Reaktionsprodukt besteht, welche strömungsmäßig mit dem Innenraum des Reaktors verbunden sind.

Aus der US-PS 3 978 195 ist ein Verfahren zur Herstellung von im wesentlichen wasserunlöslichen, kettenförmigen Ammoniumpolyphosphaten bekannt, bei welchem äquimolare Mengen von Ammoniumorthophosphat und Phosphorpentoxid in Gegenwart von Ammoniak auf Temperaturen zwischen 170 und 350 °C unter ständigem Mischen, Kneten und Zerkleinern zur Reaktion gebracht werden, wobei in der ersten Phase bei teigigem Reaktionsgemisch mit relativ geringer Drehzahl (15 bis 21 Upm) und in einer zweiten Phase nach Entstehen eines feinteiligen Produktes mit hoher Drehzahl (49 bis 64 Upm) gedreht wird, so daß sich aus dem Produkt eine Art Wirbelschicht bildet. Als Apparat zum Mischen, Kneten und Zerkleinern der Einsatzstoffe bzw. des Reaktionsproduktes wird dabei ein mit Mischwerkzeugen versehener Reaktor verwendet, wobei als Mischwerkzeuge zwei parallel angeordnete, um ihre waagerechten Achsen drehbare Doppel-Z-Schaufeln dienen.

Nachteilig ist dabei, daß der als Kneter ausgeführte Reaktor wegen seiner starken mechanischen Belastung eine stabile Bauart aufweisen muß. Darüber hinaus müssen sein Innenraum und die Doppel-Z-Schaufeln aus einer hochabriebfesten Metall-Legierung bestehen. Der Apparat ist daher sehr investitionsintensiv.

Es wurde nun überraschend gefunden, daß ein solch aufwendiger Kneter für die erste Phase der Herstellung von Ammoniumpolyphosphat, nämlich für die Vermischung von Ammoniumorthophosphat und Phosphorpentoxid sowie die Knetung der teigigen Masse unentbehrlich ist, daß jedoch nach Zerfall der teigigen Masse in ein krümeliges Produkt in der zweiten Phase ein weniger aufwendiger Mischapparat einsetzbar ist.

Im einzelnen betrifft die vorliegende Erfindung eine Anlage zur Herstellung von im wesentlichen wasserunlöslichem, kettenförmigem Ammoniumpolyphosphat, welche aus einem mit einem Antriebsmotor versehenen Reaktor mit drehbaren Misch-, Knet- und Zerkleinerungswerkzeugen besteht, wobei der Antriebsmotor des Reaktors elektrisch leitend mit einem Stromaufnahme-Meßgerät A verbunden ist, welches ein Stromaufnahme-Zeit-Diagramm mit einem ersten und einem zweiten Peak während jeder den Reaktor durchlaufenden Charge liefert, und wobei die Austragsleitung des Reaktors mit einem Mischapparat materialströmungsmäßig verbunden ist, und wobei in der Austragsleitung ein Austragsorgan angeordnet ist, und wobei das Austragsorgan von der Stromaufnahme des Antriebsmotors des Reaktors derart gesteuert wird, daß es sich beim Auftreten des zweiten Peaks im Stromaufnahme-Zeit-Diagramm öffnet und nach Entleeren des Reaktors wieder schließt. Die Anlage gemäß der Erfindung kann wahlweise auch noch dadurch weitergebildet sein, daß

a) der Mischapparat ein Drehrohrofen ist,
b) der Mischapparat ein Tellertrockner ist,
c) der Mischapparat ein Wirbelschichtreaktor ist,
d) der Mischapparat ein Knetmischer ist,
e) materialströmungsmäßig zwischen dem Reaktor und dem Mischapparat ein Bunker angeordnet ist,
f) der Bunker ein Heißbunker ist,
g) der Bunker mit einer Einrichtung zur Zerkleinerung von Agglomeraten versehen ist.

Bei der erfindungsgemäßen Anlage ist beim Übergang des im Kneter befindlichen Materials von der teigigen Masse zum krümeligen Produkt zusätzliche mechanische Energie erforderlich. Dieses zusätzliche Energieerfordernis gibt sich im Stromaufnahme-Zeit-Diagramm des den Kneter antreibenden Elektromotors als Peak zu erkennen, der als Regelgröße verwendet wird.

In der beigefügten Zeichnung ist eine Anlage gemäß der Erfindung schematisch dargestellt. Dabei zeigen:

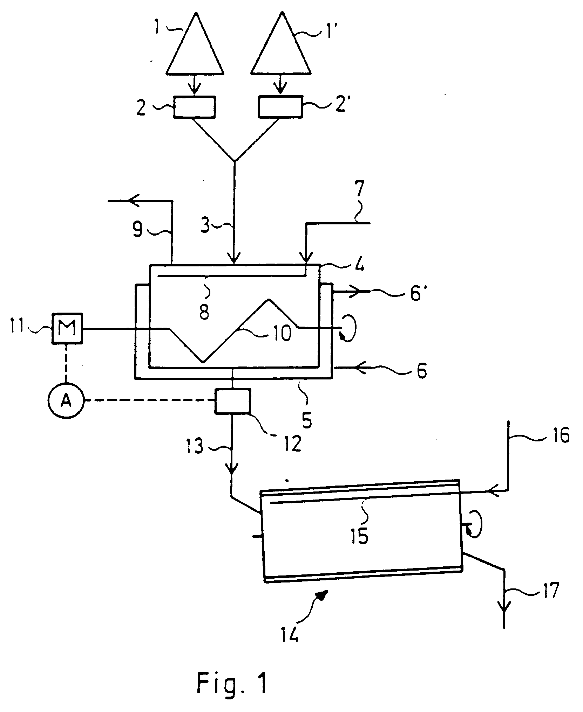

Fig. 1: die eigentliche Anlage im Schnitt;
Fig. 2: die Stromaufnahmekurve des Antriebsmotors M des Reaktors.

Aus Vorratsbehältern (1,1 ') werden die festen Rohstoffe (Ammoniumorthophosphat und Phosphorpentoxid) über Wägeeinrichtungen (2,2 ') durch eine Zuführungsleitung 3 in den Reaktor 4 eingeführt. Der Reaktor 4 besteht aus einem geschlossenen Trog, welcher mit einem Heizmantel 5 versehen ist, der Stutzen (6,6 ') für die Zu- bzw. Ableitung eines Heizmediums aufweist. Im oberen Bereich des Reaktors 4 ist ein erstes Gasverteilungsrohr 8 angeordnet, welches über ein erstes Gaszuleitungsrohr 7 mit Ammoniak beaufschlagbar ist. Überschüssiges Ammoniak kann über eine Abgasleitung 9 entweichen. Im Reaktor 4 befinden sich rotierende Werkzeuge 10, welche an einer waagerechten Achse befestigt sind.

Ein Drehrohrofen 14 ist über eine Austragsleitung 13, in welchem sich ein Absperrorgan 12 befindet, materialströmungsmäßig mit dem unteren Bereich des Reaktors 4 verbunden. Dabei wird das Absperrorgan 12 in Abhängigkeit von der Stromaufnahme des Antriebsmotors 11 am Reaktor 4 derart gesteuert, daß nach Durch-

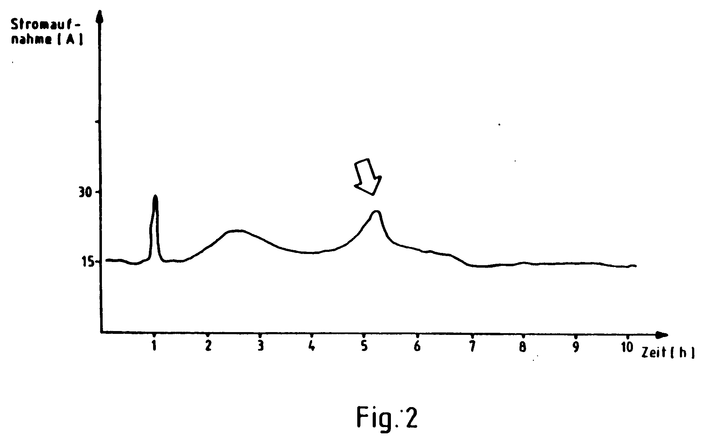

laufen eines zweiten Strompeaks (vergl. Figur 2 - Pfeil) das Absperrorgan 12 geöffnet wird. Im Drehrohrofen 14 befindet sich ein zweites Gasverteilungsrohr 15, welches über ein zweites Gaszuleitungsrohr 16 mit Ammoniak beaufschlagbar ist. Der Drehrohrofen 14 ist weiterhin mit einem Austragsrohr 17 versehen.

Da ein Drehrohrofen ebenso wie ein Tellertrockner oder ein Wirbelschichtreaktor nur kontinuierlich betrieben werden kann, aus dem als Kneter ausgebildetem Reaktor Reaktionsgut aber nur diskontinuierlich ausgetragen werden kann, muß sich strömungsmäßig zwischen dem Reaktor und dem Drehrohrofen ein nicht dargestellter Bunker als Zwischenlager befinden. Der Bunker sollte aus Energiegründen als Heißbunker ausgebildet und mit einer Einrichtung zur Zerkleinerung von Agglomeraten versehen sein. Bei Verwendung eines Knetmischers als Mischapparat kann bei Batch-Betrieb der Bunker entfallen.

In der folgenden Tabelle sind Ammoniumpolyphosphate, welche in der erfindungsgemäßen Anlage erhalten wurden, bezüglich ihrer durch chemische und röntgenographische Analyse ermittelbaren Charakteristika (pH-Wert, Säurezahl, wasserlösliche Anteile, Viskosität) aufgeführt und der Spezifikation der Type ®Exolit 422 (HOECHST AG, Frankfurt; 1989) gegenübergestellt.

EP 0 446 676 B1

## T a b e l l e

| Nr. | Tempe-ratur | Verweil-zeit | pH-Wert | Säure-zahl | wasser-lösli-cher Anteil | Vis-kosi-tät |
|---|---|---|---|---|---|---|
| | °C | h | | mg KOH/g | % | mPa.s |
| Spezifikation ®Exolit 422 | | | $5,5^{+}1,0$ | < 1 | < 10 | < 100 |

**Drehrohrofen**

| Nr. | Temp | Zeit | pH | Säure | Anteil | Visk |
|---|---|---|---|---|---|---|
| 1 | 270 | 1 | 5,0 | 0,36 | 2,1 | 28 |
| 2 | 280 | 2 | 6,1 | 0,22 | 3,1 | 82 |
| 3 | 280 | 4 | 6,3 | 0,40 | 4,2 | 20 |

**Tellertrockner**

| 4 | 280 | 1 | 6,4 | 0,95 | 4,2 | 22 |
|---|---|---|---|---|---|---|
| 5 | 280 | 2 | 6,2 | 0,42 | 3,0 | 22 |

**Wirbelschichtreaktor**

| 6 | 280 | 0,5 | 6,5 | 0,1 | 4,0 | 29 |
|---|---|---|---|---|---|---|

**Knetmischer (LÖDIGE)**

| 7 | 240 | 3 | 6,0 | 0,4 | 1,9 | 30 |
|---|---|---|---|---|---|---|
| 8 | 250 | 2 | 5,8 | 0,5 | 1,9 | 28 |
| 9 | 275 | 4 | 6,0 | 0,4 | 1,9 | 32 |

**Knetmischer (KRAUS-MAFFEI)**

| 10 | 280 | 1,6 | 5,9 | 0,39 | 3,4 | 43 |
|---|---|---|---|---|---|---|
| 11 | 280 | 1,1 | 4,9 | 0,67 | 2,7 | 36 |

**Patentansprüche**

1. Anlage zur Herstellung von im wesentlichen wasserunlöslichem, kettenförmigem Ammoniumpolyphos-

4

phat aus Ammoniumorthophosphat und Phosphorpentoxid in Gegenwart von gasförmigem Ammoniak, bestehend aus einem mit einem Antriebsmotor versehenen Reaktor mit drehbaren Misch-, Knet- und Zerkleinerungswerkzeugen in seinem Innenraum und einem Zuführungsrohr für die festen Ausgangsstoffe, einem Einleitungsrohr für Ammoniak, einem Gasableitungsrohr sowie einer Austragsleitung für das Reaktionsprodukt, welche strömungsmäßig mit dem Innenraum des Reaktors verbunden sind, dadurch gekennzeichnet, daß der Antriebsmotor (11) des Reaktors (4) elektrisch leitend mit einem Stromaufnahme-Meßgerät A verbunden ist, welches ein Stromaufnahme-Zeit-Diagramm mit einem ersten und einem zweiten Peak während jeder den Reaktor durchlaufenden Charge liefert; daß die Austragsleitung (13) des Reaktors (4) mit einem Mischapparat (14) materialströmungsmäßig verbunden ist; daß in der Austragsleitung (13) ein Austragsorgan (12) angeordnet ist; und daß das Austragsorgan (12) von der Stromaufnahme des Antriebsmotors (11) des Reaktors (4) derartig gesteuert wird, daß es sich beim Auftreten des zweiten Peaks im Stromaufnahme-Zeit-Diagramm öffnet und nach Entleeren des Reaktors (4) wieder schließt.

2. Anlage nach Anspruch 1, dadurch gekennzeichnet, daß der Mischapparat (14) ein Drehrohrofen ist.

3. Anlage nach Anspruch 1, dadurch gekennzeichnet, daß der Mischapparat (14) ein Tellertrockner ist.

4. Anlage nach Anspruch 1, dadurch gekennzeichnet, daß der Mischapparat (14) ein Wirbelschichtreaktor ist.

5. Anlage nach Anspruch 1, dadurch gekennzeichnet, daß der Mischapparat (14) ein Knetmischer ist.

6. Anlage nach mindestens einem der Ansprüche 1 bis 5, dadurch gekennzeichnet, daß materialströmungsmäßig zwischen dem Reaktor (4) und dem Mischapparat (14) ein Bunker angeordnet ist.

7. Anlage nach Anspruch 6, dadurch gekennzeichnet, daß der Bunker ein Heißbunker ist.

8. Anlage nach, Anspruch 6 oder 7, dadurch gekennzeichnet, daß der Bunker mit einer Einrichtung zur Zerkleinerung von Agglomeraten versehen ist.


## Claims

1. A plant for producing essentially water-insoluble, chain-type ammonium polyphosphate from ammonium orthophosphate and phosphorus pentoxide in the presence of gaseous ammonia, which comprises a reactor provided with a drive motor and having rotatable mixing, kneading and comminuting tools in its interior and a feed pipe for the solid starting materials, an introduction pipe for ammonia, a gas discharge pipe and a discharge line for the reaction product, which pipes are flow-connected to the interior of the reactor, wherein the drive motor (11) of the reactor (4) is electrically conductively connected to a power consumption-measuring instrument A which provides a power consumption/time diagram with a first and a second peak during each charge passing through the reactor; wherein the discharge line (13) of the reactor (4) is connected for material flow to a mixing apparatus (14); wherein a discharge device (12) is arranged in the discharge line (13); and wherein the discharge device (12) is controlled by the power consumption of the drive motor (11) of the reactor (4) in such a way that it opens when the second peak appears in the power consumption/time diagram and closes again when the reactor (4) has been emptied.

2. The plant as claimed in claim 1, wherein the mixing apparatus (14) is a rotary kiln.

3. The plant as claimed in claim 1, wherein the mixing apparatus (14) is a disk drier.

4. The plant as claimed in claim 1, wherein the mixing apparatus (14) is a fluidized-bed reactor.

5. The plant as claimed in claim 1, wherein the mixing apparatus (14) is a kneading mixer.

6. The plant as claimed in at least one of claims 1 to 5, wherein a bunker is arranged for material flow between the reactor (4) and the mixing apparatus (14).

7. The plant as claimed in claim 6, wherein the bunker is a hot bunker.

8. The plant as claimed in claim 6 or 7, wherein the bunker is provided with a device for comminuting agglomerates.

## Revendications

1.  Installation pour la fabrication de polyphosphate d'ammonium en chaîne, sensiblement insoluble dans l'eau, à partir d'orthophosphate d'ammonium et de pentoxyde de phosphore, en présence d'ammoniac gazeux, consistant en un réacteur muni d'un moteur d'entraînement et d'outils rotatifs de mélange, de malaxage et de fragmentation à l'intérieur et d'un tube d'alimentation pour les matières premières solides, d'un tube d'introduction pour l'ammoniac, d'un tube d'évacuation de gaz et d'une conduite d'évacuation pour le produit réactionnel, qui sont reliés avec l'intérieur du réacteur conformément au courant, caractérisée en ce que le moteur d'entraînement (11) du réacteur (4) est relié en forme électriquement conductrice à un appareil de mesure de consommation de courant (A) qui délivre un diagramme consommation de courant-temps présentant un premier pic et un second pic pendant que chaque charge traverse le réacteur, en ce que la conduite d'évacuation (13) du réacteur (4) est reliée conformément au courant de matière à un appareil de mélange (14), en ce qu'un organe d'évacuation (12) est disposé dans la conduite d'évacuation (13) et en ce que l'organe d'évacuation (12) est commandé par la consommation de courant du moteur d'entraînement (11) du réacteur (4) de telle manière qu'il s'ouvre à l'apparition du second pic dans le diagramme consommation de courant-temps et qu'il se ferme de nouveau après la vidange du réacteur (4).

2.  Installation selon la revendication 1, caractérisée en ce que l'appareil de mélange (14) est un four tubulaire rotatif.

3.  Installation selon la revendication 1, caractérisée en ce que l'appareil de mélange (14) est un sécheur à plateaux.

4.  Installation selon la revendication 1, caractérisée en ce que l'appareil de mélange (14) est un réacteur à couche fluidisée.

5.  Installation selon la revendication 1, caractérisée en ce que l'appareil de mélange (14) est un mélangeur-malaxeur.

6.  Installation selon l'une au moins des revendications 1 à 5, caractérisée en ce qu'un réservoir est prévu conformément au courant de matière entre le réacteur (4) et l'appareil de mélange (14).

7.  Installation selon la revendication 6, caractérisée en ce que le réservoir est un réservoir chauffant.

8.  Installation selon la revendication 6 ou 7, caractérisée en ce que le réservoir est muni d'un dispositif pour fragmenter les agglomérats.

Fig. 1

Fig. 2

EP 0 446 676 B1